# EUROPEAN PATENT APPLICATION

(11) **EP 4 553 124 A1**
(43) Date of publication of application: **14.05.2025**
(21) Application number: 23835626.5
(22) Date of filing: 07.07.2023
(51) Int. Cl.: C09J 111/02, C09J 11/08

(54) **ADHESIVE COMPOSITION CONTAINING CHLOROPRENE POLYMER LATEX**

(30) Priority: 08.07.2022 JP 2022110576
(71) Applicant: Resonac Corporation, Tokyo 105-7325 (JP)
(72) Inventor: OGAWA, Masahiro, Tokyo 105-8518 (JP); MAKIO, Ryo, Tokyo 105-8518 (JP); OGAWA, Noriko, Tokyo 105-8518 (JP); SHIBUYA, Akira, Tokyo 105-8518 (JP)
(74) Representative: Strehl & Partner mbB
(86) International application number: PCT/JP2023/025360
(87) International publication number: WO 2024/010095

(57) **Abstract**

[Objective] To develop, as an automotive interior material, a chloroprene polymer latex adhesive composition being excellent in terms of both characteristics of adhesiveness to nonpolar materials such as olefins and thermal creep resistance and having favorable storage stability without performing a complicated step.

[Solution] An adhesive composition containing a chloroprene polymer latex, containing a chloroprene polymer latex (A), a tackifier (B), and a chlorinated polyolefin resin (C), in which a content rate of a gel component of a chloroprene polymer in the chloroprene polymer latex (A) is more than 0 mass% and 50 mass% or less, the tackifier (B) has a softening point of 85°C or higher, and the chlorinated polyolefin resin (C) has a softening point of lower than 80°C,
the tackifier (B) is more than 5 parts by mass and less than 30 parts by mass relative to 100 parts by mass of a solid content of the chloroprene polymer latex (A),
the chlorinated polyolefin resin (C) is 6 parts by mass or more and less than 30 parts by mass relative to 100 parts by mass of a solid content of the chloroprene polymer latex (A), and
no crosslinking agent is contained.

## Description

### Technical Field

The present invention relates to a latex adhesive composition in which a chloroprene polymer latex is used, an adhesive layer, and a laminate.

### Background Art

Chloroprene polymers refer to polychloroprene obtained by the emulsion polymerization or the like of 2-chloro-1,3-butadiene and exhibit a high cohesive force and high crystallinity. Chloroprene polymers are mainly produced by emulsion polymerization, and chloroprene polymer latexes in which polymerized polymer particles have dispersed in water can be applied to base materials without dissolving the chloroprene polymer in a solvent and are being used in, for example, furniture, shoes, civil engineering and construction, and wetsuits as eco-friendly water-based adhesives.

Recently, due to the global regulatory tightening on organic volatiles, a switch from solvent-based adhesives to water-based adhesives having a small environmental impact has been underway, and there has been an increasing demand for chloroprene polymer latexes as water-based adhesives. However, polyolefin resins, which are used as automotive interior materials such as sheets or instrument panels, are nonpolar materials and thus have a large polarity difference from chloroprene polymers, which makes it extremely difficult to develop a sufficient adhesive strength with respect to polyolefin resins. Examples of the polyolefin resins include polyethylene resins and polypropylene resins.

Polyolefin resins are inexpensive and lightweight and are in use in a wide range of fields including automotive interiors for improvement in fuel efficiency or architectural interiors. When this polyolefin resin is not capable of adhering, since limitations are caused on manufacturing steps of products, problems have been solved by reforming adhesive surfaces by, for example, an oxidation treatment or a chemical treatment or the use of an appropriate primer or crosslinking agent.

Recently, there has been a demand for a water-based adhesive on which a surface treatment as described above is not performed from the viewpoint of reducing the cost taken for surface treatments. Furthermore, in a case where the temperature in a car in the summer increases up to a high temperature (for example, 80°C) in an automotive interior material, when the heat resistance of an adhesive lacks, creep such as lifting or peeling occurs. In fields where such thermal creep resistance is required, water-based adhesives that sufficiently satisfy required characteristics have not yet been developed. Therefore, studies are underway regarding improvement in the adhesiveness of chloroprene polymer latex adhesives to polyolefin resins in order to meet these desires.

Patent Literature 1 discloses a polychloroprene polymer latex adhesive composition containing a copolymer of a chloroprene monomer and an ethylenically unsaturated carboxylic acid, a carboxy-modified chloroprene-based polymer latex (a) containing a polyvinyl alcohol, which is a nonionic surfactant, a chlorinated polyolefin resin emulsion (b), and zinc oxide (c).

Patent Literature 2 discloses a chloroprene rubber latex adhesive composition containing a chloroprene rubber latex (a) synthesized using a rosinate-based activator, a chloroprene rubber latex (b) having a carboxyl group or a hydroxyl group in the molecule, and a carbodiimide compound.

Patent Literature 3 discloses a chloroprene-based latex adhesive composition, in which, relative to 100 parts by weight of the solid content of a chloroprene polymer latex (A) having a gel content rate of 40% or less, the amount (solid content) of a tackifier resin emulsion (B) is 1 to 100 parts by weight, the amount (solid content) of a chlorinated polyolefin resin emulsion (C) is 1 to 20 parts by weight, and the amount of a titanium chelate (D) is 0.1 to 10 parts by weight.

Patent Literature 4 discloses a chloroprene rubber latex adhesive composition containing a carboxy-modified chloroprene-based copolymer latex (A) containing a copolymer of a chloroprene monomer and an ethylenically unsaturated carboxylic acid and a polyvinyl alcohol, a chloroprene-based polymer latex (B) containing a chloroprene homopolymer or a copolymer of a chloroprene monomer and a different monomer, and a rosin acid metal salt, and a chlorinated polyolefin resin emulsion (C), in which the ratio of the contents between the carboxy-modified chloroprene-based copolymer latex (A) and the chloroprene-based polymer latex (B) in terms of the solid content is 80:20 to 20:80.

### Citation List

### Patent Literature

Patent Literature 1: JP2017-222804A
Patent Literature 2: JP2011-63672A
Patent Literature 3: JP2002-275442A
Patent Literature 4: WO2018/043586

### Summary of Invention

### Technical Problem

In Patent Literature 1, the chloroprene copolymer latex obtained by copolymerizing an ethylenically unsaturated carboxylic acid is used to improve the adhesion performance of the chloroprene polymer latex adhesive to polyolefin resins, but a complicated work such as the necessity of copolymerizing an ethylenically unsaturated carboxylic acid is required.

In addition, in Patent Literature 2, two kinds of chloroprene polymer latexes having specific content rates of a gel component are blended together, and furthermore, the carbodiimide compound is blended as the crosslinking agent, whereby the adhesiveness or the heat resistance is improved, but there is a problem in that the storage stability is poor since the crosslinking agent has been blended.

In Patent Literature 3, the titanium chelate is blended as the crosslinking agent with the chloroprene polymer latex having a specific content rate or less of a gel component, whereby the olefin adhesion resistance and the thermal creep resistance are improved, but there is a problem in that the storage stability is poor since the crosslinking agent has been blended and the blending work is complicated.

In Patent Literature 4, the carboxy-modified chloroprene-based copolymer latex and the chloroprene polymer latex are blended together at a specific blending ratio, whereby the adhesive strength or the thermal creep resistance is improved, but the carboxy-modified chloroprene-based copolymer latex is produced by copolymerization, which creates the necessity of blending the chloroprene polymer latex, and there is thus a problem in that both the step itself and the blending work are complicated.

Therefore, an objective of the present invention is to develop, as an automotive interior material, a chloroprene polymer latex adhesive composition being excellent in terms of both characteristics of adhesiveness to nonpolar materials such as olefins and thermal creep resistance and having favorable storage stability without performing a complicated step such as the blending of a plasticizer or copolymerization.

### Solution to Problem

As a result of a variety of studies for achieving the above-described objective, the present inventors found that the above-described objective is achieved by adding a tackifier (B) and a chlorinated polyolefin resin (C) to a chloroprene polymer latex (A) having a specific content rate of a gel component.

That is, the present invention relates to an adhesive composition containing a chloroprene polymer latex, containing the following chloroprene polymer latex (A), tackifier (B), and chlorinated polyolefin resin (C) and an adhesive layer.

That is, the present invention has the following configurations.
[1] An adhesive composition containing a chloroprene polymer latex, comprising: a chloroprene polymer latex (A); a tackifier(s) (B); and a chlorinated polyolefin resin (C), wherein a content rate of a gel component of a chloroprene polymer in the chloroprene polymer latex (A) is more than 0 mass% and 50 mass% or less, at least one of the tackifiers (B) has a softening point of 85°C or higher, and the chlorinated polyolefin resin (C) has a softening point of lower than 80°C,
   the tackifier (B) is more than 5 parts by mass and less than 30 parts by mass relative to 100 parts by mass of a solid content of the chloroprene polymer latex (A),
   the chlorinated polyolefin resin (C) is 6 parts by mass or more and less than 30 parts by mass relative to 100 parts by mass of a solid content of the chloroprene polymer latex (A), and
   no crosslinking agent is contained.
[2] The adhesive composition containing a chloroprene polymer latex according to [1], wherein the chloroprene polymer is a chloroprene homopolymer or a copolymer containing at least chloroprene and 2,3-dichloro-1,3-butadiene.
[3] The adhesive composition containing a chloroprene polymer latex according to [1] or [2], wherein the tackifier (B) comprises at least one of a rosin resin, a rosin ester resin, a terpene phenol resin, and an alicyclic petroleum resin.
[4] The adhesive composition containing a chloroprene polymer latex according to [1] to [3], wherein the softening point of the tackifier (B) is 85°C or higher and 250°C or lower.
[5] The adhesive composition containing a chloroprene polymer latex according to [1] to [4], further comprising a metal oxide or a hydroxide.
[6] The adhesive composition containing a chloroprene polymer latex according to [1] to [5], further comprising a thickener.
[7] An adhesive layer comprising the adhesive composition containing a chloroprene polymer latex according to [1] to [6].
[8] A laminate obtained by laminating two kinds of adherends through the adhesive composition containing a chloroprene polymer latex according to [1] to [6].
[9] The laminate according to [8], wherein at least one of the adherends is a foamed organic material.
[10] The laminate according to [9], wherein the foamed organic material in the laminate is any of polypropylene, polyethylene, and polyurethane.

### Advantageous Effect of Invention

The adhesive composition containing a chloroprene polymer latex of the present invention has a high adhesive force, is excellent in terms of thermal creep resistance, and is particularly excellent in terms of adhesiveness to nonpolar materials.

Therefore, the adhesive composition containing a chloroprene polymer latex of the present invention is suitable as an adhesive for an adherend that is a material such as a polyolefin resin or polyurethane. In addition, the chloroprene polymer latex of the present invention can be suitably used with no generation of creep even in a use where the chloroprene polymer latex is exposed to a high temperature (for example, 80°C) such as an adhesive in an automotive interior material.

### Description of Embodiment

Hereinafter, an embodiment of the present invention will be specifically described.

An adhesive composition containing a chloroprene polymer latex of the present embodiment contains [1] a chloroprene polymer latex (A), a tackifier (B), and a chlorinated polyolefin resin (C).

### <Chloroprene Polymer Latex (A)>

The chloroprene polymer latex (A) contains the particles of a chloroprene polymer dispersed in water.

The chloroprene polymer in the chloroprene polymer latex (A) is a homopolymer of 2-chloro-1,3-butadiene (hereinafter, also referred to as "chloroprene") or a copolymer containing chloroprene as at least a monomer component.

### Chloroprene Polymer

The chloroprene polymer that configures the chloroprene polymer latex (A) of the present embodiment is a homopolymer of chloroprene or a copolymer of chloroprene. In the case of the copolymer, the chloroprene polymer may be any of a copolymer of chloroprene and 2,3-dichloro-1,3-butadiene, a copolymer of chloroprene and a different copolymerizable monomer or a copolymer of chloroprene, 2,3-dichloro-1,3-butadiene and a different copolymerizable monomer. In addition, regarding a unit derived from the different copolymerizable monomer, two or more kinds may be copolymerized as necessary. The chloroprene polymer is preferably a polymer containing more than 50 mol% of chloroprene as a monomer component.

The chloroprene polymer is preferably a homopolymer of chloroprene or a copolymer of at least chloroprene and 2,3-dichloro-1,3-butadiene as monomer components and more preferably a copolymer of chloroprene and 2,3-dichloro-1,3-butadiene.

The different copolymerizable monomer that may be contained in the chloroprene polymer that configures the chloroprene polymer latex (A) of the present embodiment is not particularly limited as long as the monomer can be copolymerized with at least one of the chloroprene and 2,3-dichloro-1,3-butadiene, and examples thereof include 1-chloro-1,3-butadiene, butadiene, isoprene, styrene, acrylonitrile, acrylic acid esters thereof, methacrylic acid and esters thereof and the like.

In the chloroprene polymer that configures the chloroprene polymer latex (A) of the present embodiment, when the sum of the chloroprene, 2,3-dichloro-1,3-butadiene, and the different copolymerizable monomer component is regarded as 100 parts by mass, a unit derived from the chloroprene is preferably 80 parts by mass or more, more preferably 85 parts by mass or more, and still more preferably 88 parts by mass or more. The upper limit is preferably 100 parts by mass or less.

In addition, in a case where a unit derived from 2,3-dichloro-1,3-butadiene is contained, the unit may be contained in any amount of more than 0 parts by mass, and the upper limit is preferably less than 20 parts by mass, more preferably less than 15 parts by mass, and still more preferably less than 12 parts by mass. The different copolymerizable monomer is preferably contained in an amount of 5 parts by mass or less.

The latex composed of the chloroprene polymer in which the composition of the monomer components is within the above-described range is imparted with tackiness by suppressing the crystallization of the chloroprene polymer, and the adhesive force of an adhesive layer thus becomes high, which is preferable.

The average particle diameter of the chloroprene polymer particles that configure the latex is preferably 50 nm or more, more preferably 70 nm or more, and still more preferably 90 nm or more. In addition, the upper limit of the average particle diameter is preferably 500 nm or less, more preferably 300 nm or less, and still more preferably 210 nm or less.

In the latex in which the average particle diameter of the chloroprene polymer particles is within the above-described range, since the emulsification stability of the latex particles is poor, during adhesion, the emulsification system rapidly breaks, and the adhesive force is developed, the adhesive strength of the adhesive layer thus becomes high, which is preferable.

The content rate of a gel component of the chloroprene polymer in the chloroprene polymer latex (A) is preferably more than 0 mass%, preferably 10 mass% or more, and more preferably 20 mass%. In addition, the upper limit is 50 mass% or less, preferably 45 mass% or less, and more preferably 40 mass% or less.

When the content rate of the gel component is within the above-described range, the latex containing the chloroprene polymer has excellent thermal creep resistance and high adhesiveness since a crosslinked structure is formed in the chloroprene polymer.

Based on such a reason as well, in the present embodiment, it is desirable that substantially no crosslinking agent is contained in the adhesive composition containing a chloroprene polymer latex. Generally, examples of the crosslinking agent include polyisocyanate compounds, carbodiimide compounds, and oxazoline compounds, and, when a crosslinking agent is contained, there are cases where the storage stability of the composition becomes low.

Two or more kinds of the chloroprene polymer latexes (A) may be combined together.

A method for obtaining the chloroprene polymer latex (A) is not limited, and, as one embodiment, chloroprene alone or chloroprene and 2,3-dichloro-1,3-butadiene plus the different copolymerizable monomer as necessary may be emulsion-polymerized using a polymerization initiator and a chain transfer agent as necessary in the presence of an emulsifier, preferably, a rosin acid metal salt, and a polymerization inhibitor may be added thereto when a predetermined polymerization conversion rate is reached to stop the polymerization.

The kind of the emulsifier for the chloroprene polymer latex (A) of the present embodiment is not particularly limited, examples thereof include anionic emulsifiers and nonionic emulsifiers, and anionic emulsifiers are particularly preferable. These emulsifiers may be used singly, or two or more thereof may be used in combination.

The kind of the anionic emulsifier is not particularly limited, examples thereof include alkali metal salts of rosin acid, dodecylbenzenesulfonates (for example, sodium dodecylbenzenesulfonate and triethanolamine dodecylbenzenesulfonate), diphenyl ether sulfonates (for example, sodium diphenyl ether sulfonate and ammonium diphenyl ether sulfonate), naphthalenesulfonates (for example, sodium β-naphthalenesulfonate formaldehyde condensate), and fatty acid alkali metal salts (for example, potassium laurate), and alkali metal salts of disproportionated rosin acid are particularly preferable.

The kind of the rosin acid is not particularly limited, examples thereof include gum rosin, wood rosin, tall rosin, disproportionated rosin obtained by a disproportionation reaction thereof, and purified rosin, and disproportionated rosin is preferable. As the metal salt, an alkali metal salt is normally used, and a sodium salt and/or a potassium salt is preferable. In addition, the alkali metal salt of rosin acid may be produced by separately adding a rosin acid and an alkali metal hydroxide.

The kind of the nonionic emulsifier is not particularly limited, examples thereof include partially saponified polyvinyl alcohol, polyoxyethylene nonylphenyl ether, polyoxyethylene octylphenyl ether, and polyoxyethylene lauryl ether, and partially saponified polyvinyl alcohol is particularly preferable.

These emulsifiers may be used singly, or two or more thereof may be used in combination.

In the present embodiment, the emulsifier preferably contains a rosin acid metal salt.

In a case where the rosin acid metal salt is contained, the content thereof is preferably 0.5 parts by mass or more, more preferably 1.0 part by mass or more, and still more preferably 1.5 parts by mass or more, relative to 100 parts by mass of the prepared monomers. The upper limit of the content of the rosin acid metal salt is 8 parts by mass or less, more preferably 6.5 parts by mass or less, and still more preferably 5.0 parts by mass or less. When the content of the rosin acid metal salt is set within the above-described range, it is possible to improve the polymerization stability during the emulsification polymerization, and the number of micelles to be formed is appropriate, whereby the generation of heat in the initial stage of the polymerization is suppressed, and the viscosity during the polymerization can be made to be a predetermined value. The content of the rosin acid metal salt is based on the prepared monomers, which is the same meaning as being based on the solid content of the polymer, and corresponds to the content in the chloroprene polymer latex (A).

The solid content concentration of the chloroprene polymer latex (A) is preferably 35 mass% or more, more preferably 40 mass% or more and still more preferably 45 mass% or more. The upper limit of the solid content concentration of the chloroprene polymer latex (A) is preferably 65 mass% or less and more preferably 60 mass% or less.

When the solid content concentration is within the above-described range, it is possible to shorten the drying time of the chloroprene polymer latex (A) and reduce the load on a dryer. In addition, when the solid content concentration is within the above-described range, it is easier to maintain the stability of the colloid of the chloroprene polymer latex (A), and it is possible to minimize the possibility of the generation of an aggregate. The dispersion medium is normally water.

The solid content in the present embodiment is a component obtained by removing a component that volatilizes under solid content measurement conditions, such as a solvent or a volatile component, from the latex or the emulsion, and the solid content of the chloroprene polymer latex (A) includes not only the chloroprene polymer but also the emulsifier used during the production, for example, the rosin acid metal salt.

### <Tackifier (B)>

The tackifier (B) is added to improve the adhesiveness of the adhesive composition containing a chloroprene polymer latex and the contact properties of the chloroprene polymer. Particularly, contact properties in a case where a polyolefin is used as an adherend can be improved.

The tackifier (B) is more than 5 parts by mass, preferably 10 parts by mass or more, and more preferably 18 parts by mass or more, relative to 100 parts by mass of the solid content of the chloroprene polymer latex (A). In addition, the upper limit is less than 30 parts by mass, preferably 25 parts by mass or less, and more preferably 22 parts by mass or less. When the tackifier (B) is contained within the above-described range, it is possible to improve the adhesiveness of the adhesive composition containing a chloroprene polymer latex and the contact adhesiveness of the chloroprene polymer and to improve the thermal creep resistance with adherends.

Regarding the softening point of the tackifier (B), at least one is 85°C or higher and preferably 90°C or higher. The upper limit of the softening point of the tackifier (B) is not particularly limited, but is preferably 250°C or lower and more preferably 200°C or lower. When the tackifier (B) has a softening point within the above-described range, it is possible to maintain the adhesiveness of the adhesive composition containing a chloroprene polymer latex at high temperatures and to improve the thermal creep resistance.

The tackifier (B) may be used singly, or two or more thereof may be used in combination. In a case where two or more tackifiers (B) are used, at least one needs to have a softening point of 85°C or higher. In a case where two or more are used, the softening points of all of the tackifiers (B) are preferably 85°C or higher.

In a case where the tackifier (B) is used in an emulsion or a solution as described below, the amount becomes the amount of a solid content obtained by removing the solvent or the like.

The kind of the tackifier (B) is not particularly limited, and examples thereof include petroleum-based resins such as a rosin resin, a rosin ester resin, a terpene phenolic resin, an aliphatic petroleum resin, an alicyclic petroleum resin, an aromatic petroleum resin, a copolymer petroleum resin, and hydrogenated products thereof, and alkylphenolic resins.

Examples of the rosin resin and the rosin ester resin include gum rosin, tall rosin, wood rosin, disproportionated rosin, polymerized rosin, hydrogenated products thereof, and esterified products thereof, and examples of the terpene phenolic resin include hydrogenated products of a terpene phenol resin. The tackifier (B) preferably contains at least one of a rosin resin, a terpene phenol resin, and an alicyclic petroleum resin and is more preferably at least one selected from a rosin ester resin and a terpene phenol resin. The rosin resin and the rosin ester resin that are used as the tackifier (B) are different from the alkali metal salt of the rosin acid and may not be an alkali metal salt.

As a method for adding the tackifier (B), an emulsion of the tackifier (B) is generally mixed with the chloroprene polymer latex (A), but the tackifier (B) itself may be added during the production step of the chloroprene polymer latex (A). This addition method is effective as one of the methods for adding a tackifier (B) for which no emulsions are commercially available.

As commercially available products of the tackifier (B) that can be used in the present embodiment, there are SUPER ESTER (registered trademark) E-900-NT manufactured by Arakawa Chemical Industries, Ltd., which is a polymerized rosin-based emulsion, E-720W manufactured by Taiwan Arakawa Chemical Industries, Ltd., HARIESTER SK-218NS, HARIESTER SK-323NS, and HARIESTER SK-508H manufactured by Harima Chemicals Group, Inc., which are rosin-based emulsions, TAMANOL (registered trademark) E-100, TAMANOL (registered trademark) E-200NT, TAMANOL (registered trademark) E-102A manufactured by Arakawa Chemical Industries, Ltd., which are terpene phenolic resin emulsions, TR-602 manufactured by BASF SE, and the like. In addition, as a solid-form tackifier (B), there are ARKON (registered trademark) M-135 manufactured by Arakawa Chemical Industries, Ltd., which is an alicyclic petroleum resin, and the like.

### <Chlorinated polyolefin resin (C)>

The chlorinated polyolefin resin (C) refers to a resin obtained by chlorinating a polyolefin. The chlorinated polyolefin resin (C) is a component that contributes to imparting adhesiveness to nonpolar materials such as polyolefin resins to the adhesive composition containing a chloroprene polymer latex.

The content of the chlorinated polyolefin resin (C) is 6 parts by mass or more, preferably 8 parts by mass or more, and more preferably 10 parts by mass or more, relative to 100 parts by mass of the solid content of the chloroprene polymer (A). The upper limit of the content is less than 30 parts by mass, preferably 25 parts by mass or less, and more preferably 22 parts by mass or less.

The addition of the chlorinated polyolefin resin (C) makes it possible to enhance the favorable adhesiveness to polyolefin resins, and, within the above-described numerical range, high thermal creep resistance can be maintained, and the cost is excellent. In a case where the chlorinated polyolefin resin (C) is used in an emulsion or a solution as described below, the above-described amount becomes the amount of a solid content obtained by removing a component that volatilizes under solid content measurement conditions, such as a solvent or a volatile component, and, in a case where the surfactant is contained, the amount including the surfactant as well becomes the solid content.

The softening point of the chlorinated polyolefin resin (C) is lower than 80°C, preferably 75°C or lower, and more preferably 70°C or lower. The lower limit of the softening point of the chlorinated polyolefin resin (C) is preferably 40°C or higher. When the chlorinated polyolefin resin (C) having a softening point within the above-described range is contained, the chlorinated polyolefin resin (C) is compatible with the chloroprene polymer during drying, and the adhesiveness to polypropylene resins improves.

As a raw material of the chlorinated polyolefin resin (C), a well-known material that can be a raw material of a chlorinated polyolefin resin can be freely selected and used as long as the effect of the present embodiment is not impaired. Examples thereof include crystallized polypropylene, amorphous polypropylene, polybutene-1, low-density or high-density polyethylene, ethylene/propylene copolymers, ethylene/propylene/diene copolymers, and the like.

The chlorinated polyolefin resin (C) is preferably an acid-modified chlorinated polyolefin resin obtained by graft-polymerizing at least one monomer selected from α,β-unsaturated carboxylic acid and anhydrides thereof. Here, examples of the α,β-unsaturated carboxylic acid and the anhydrides thereof include maleic acid, itaconic acid, citraconic acid, fumaric acid, mesaconic acid, aconitic acid, maleic anhydride, itaconic anhydride, citraconic anhydride, aconitic anhydride and the like. When the chlorinated polyolefin resin (C) is acid-modified, cross-linking of a polyvalent metal ion and a carboxy group occurs in a case where a metal oxide, such as zinc oxide or magnesium oxide, has been blended into an adhesive, and it is possible to improve adhesion performance, such as thermal creep resistance or solvent resistance.

The chlorine content rate of the chlorinated polyolefin resin (C) is not particularly limited, but is preferably 10 mass% or more, more preferably 16 mass% or more, and still more preferably 18 mass% or more. In addition, the upper limit is preferably 40 mass% or less, more preferably 22 mass% or less, and still more preferably 21 mass% or less. When the chlorine content rate of the chlorinated polyolefin resin (C) is set within the above-described range, the adhesive force to nonpolar materials, for example, polyolefin resins in particular, improves.

Another aspect of the present embodiment is an adhesive composition containing a chloroprene polymer latex, containing the chloroprene polymer latex (A), the tackifier (B), and the chlorinated polyolefin resin (C), in which the softening point of the tackifier (B) is higher than the softening point of the chlorinated polyolefin resin (C) by 5°C or more. In this aspect, the content rate of the gel component of the chloroprene polymer latex (A) is not particularly limited, and the softening points themselves of the tackifier (B) and the chlorinated polyolefin resin (C) are not particularly limited as long as the difference therebetween is 5°C or more, but are preferably the softening points exemplified above.

The usage form of the chlorinated polyolefin resin (C) is not particularly limited as long as the chloroprene polymer latex (A) and the tackifier (B) can be mixed together, but is normally an emulsion in which the chlorinated polyolefin resin (C) is dispersed in a dispersion medium. In addition, in the emulsion, a surfactant may be contained as appropriate for emulsification. The surfactant that is used in the emulsion of the chlorinated polyolefin resin (C) is also not particularly limited as long as the effect of the present embodiment is not impaired, and examples thereof include nonionic surfactants, anionic surfactants, cationic surfactants and amphoteric surfactants. In the present technique, a nonionic surfactant is preferably used from the viewpoint of the storage stability of the adhesive composition.

As a commercially available product that can be used as the chlorinated polyolefin resin (C), there is, for example, a water-based chlorinated polyolefin SUPERCHLON (registered trademark) E-480T manufactured by Nippon Paper Industries Co., Ltd.

The solid content concentration of the chlorinated polyolefin resin (C) emulsion is preferably 15 mass% or more and more preferably 20 mass% or more. In addition, the upper limit is preferably 60 mass% or less and more preferably 45 mass% or less. When the solid content concentration is within the above-described range, the viscosity is appropriate, and the chlorinated polyolefin resin (C) is easily mixed with the chloroprene polymer latex (A) and the tackifier (B). The dispersion medium is normally water. As an additive, a solvent that is compatible with water, such as ethylene glycol or ethanol, may be contained.

Two or more chlorinated polyolefin resins (C) may be combined together.

### <Metal oxide or hydroxide>

In the adhesive composition containing a chloroprene polymer latex according to the present embodiment, in addition to the chloroprene polymer latex (A), the tackifier (B), and the chlorinated polyolefin resin (C), a metal oxide or hydroxide can be contained.

The metal oxide or hydroxide is preferably a polyvalent metal oxide or hydroxide and more preferably a metal oxide or hydroxide of a metal other than divalent alkali rare earth metals.

The metal oxide or hydroxide is added to improve the adhesiveness and thermal creep resistance of the adhesive composition. Particularly, when a carboxy group is contained in the adhesive composition, since cross-linking of a polyvalent metal ion and the carboxy group, it is possible to further improve the thermal creep resistance. In addition, adhesiveness in a case where a polyolefin is used as an adherend can be improved.

The metal oxide or hydroxide is used in an amount of preferably 0.3 parts by mass or more, more preferably 0.5 parts by mass or more, and still more preferably 1.0 part by mass or more in terms of the solid content relative to 100 parts by mass of the chloroprene polymer latex (A) in terms of the solid content. In addition, the upper limit is preferably 10 parts by mass or less, more preferably 7 parts by mass or less, and still more preferably 5 parts by mass or less. The addition of the metal oxide or hydroxide makes it possible to improve the thermal creep resistance. In addition, the addition of the metal oxide or hydroxide within the above-described range makes it possible to prevent a decrease in the initial adhesive strength and deterioration of the contact adhesiveness and to reduce the cost.

Specific examples of the metal oxide or hydroxide that can be used in the present embodiment include zinc oxide, magnesium oxide, zinc hydroxide, magnesium hydroxide and the like, and zinc oxide and magnesium oxide are more preferable. It is also possible to jointly use two or more of these metal oxides. Among these, zinc oxide easily forms an ionic crosslink with the chloroprene polymer and is preferable.

In addition, the metal oxide or hydroxide is preferably added in a form of being dispersed in water to be rapidly mixed with water-based adhesives. As commercially available products that can be used in the present embodiment, there are AZ-SW manufactured by Osaki Industry Co., Ltd. and the like.

The above adhesive composition containing a chloroprene polymer latex of the present embodiment is produced by mixing, for example, the metal oxide or the hydroxide as necessary in addition to the chloroprene polymer latex (A), the tackifier (B), and the chlorinated polyolefin resin (C).

A mixing method is not particularly limited, and a well-known method, such as mixer, can be employed.

To the adhesive composition containing a chloroprene polymer latex of the present embodiment, it is possible to arbitrarily add a filler, a pigment, a colorant, a wetting agent, an anti-foaming agent, a thickener or the like.

In the composition of the present embodiment, a form in which a thickener is contained is also desirable. As the thickener, SN-thickener series containing urethane-modified polyether (manufactured by SAN NOPCO LIMITED) can be used.

The solid content concentration or viscosity of the obtained adhesive composition containing a chloroprene polymer latex is adjusted as appropriate depending on the purpose. As an adjusting method, a well-known method, for example, evaporation or addition of moisture, is employed.

In the present embodiment, an adhesive layer is formed from the adhesive composition containing a chloroprene polymer latex.

A method for producing the adhesive layer is not limited, and the adhesive layer can be produced by applying the adhesive composition to the adherend surface on the base material side, then, drying the adhesive composition at a temperature of 40°C or higher for 3 minutes or longer, and pasting another adherend thereto by heating the adherend at a temperature of 130°C or higher for 1 minute or longer. The base material refers to a material having a sufficient strength and sufficient stiffness in the adherend, and examples thereof include resins and metals. As the resins, there are polyethylene, polypropylene, and ABS resins, and as the metals, there are iron and aluminum.

The drying temperature is preferably 60°C or higher and more preferably 80°C or higher.

The adherend is not particularly limited as long as the adhesive composition can be applied thereto, and the adherend can be used for the adhesion of a foam, a sheet, a film, canvas, glass or the like. The adhesive composition is highly adhesive to polyolefins or polyurethanes that are hardly adhesive and is thus effective in a case where at least one of the adherends is a polyolefin or a polyurethane.

Particularly, the composition of the present embodiment is highly effective in the case of a laminate in which at least one of the above-described adherends is a foamed organic material and is more highly effective when the foamed organic material is any of hardly adhesive polypropylene, polyethylene, or polyurethane.

An application method is also not particularly limited, and a well-known method, such as brush coating, spatula coating, spraying, dipping, or coating, can be employed. The thickness of the adhesive layer is not particularly limited as long as the adhesive force can be held, is normally approximately 20 to 100 µm after the adhesive layer is dried, and is not particularly limited.

In addition, the present embodiment is a laminate formed by laminating adherends through the adhesive layer.

That is, the laminate according to the present embodiment is formed by laminating two adherends through the adhesive composition containing a chloroprene polymer latex, and at least one of the adherends is a polyolefin. Even when both of the adherends are made of the same material, the adherends can be used with no particular limitations. In addition, such a method for producing the laminate is also not particularly limited, and adhesion may be performed by providing an adhesive layer(s) to either or both adherends in advance and then laminating the adherends. In order for strong adhesion, the laminate may be pressurized. The laminate may be pressurized as a whole or a pressure may be applied only to parts where the adhesive layer has been provided. A pressurization method is not particularly limited, and the pressure is also not particularly limited unless the pressure is high enough to cause significant deformation of the adhesive layer.

### Examples

Hereinafter, the present invention will be described with reference to examples and comparative examples, but the present invention is not limited to the following examples by any means.

Physical properties shown in the examples and the comparative examples were measured under the following conditions and by the following measurement methods.

### [Measurement Methods]

### 1) Solid Content Concentration

The solid content concentrations of the chloroprene polymer latex (A), the tackifier (B), and an emulsion of the chlorinated polyolefin resin (C) are calculated from the mass before drying and the mass after drying after 1 g of the chloroprene polymer latex (A), the tackifier (B), or the emulsion of the chlorinated polyolefin resin (C) was dried by being thermally treated on an aluminum dish having a diameter of 39 mm (at 141°C for 30 minutes) in the atmosphere to leave the solid content alone.

Solid content concentration (mass%) = [(mass of latex or emulsion after drying at 141°C for 30 minutes)/(mass of latex or emulsion before drying)] × 100

### 2) Polymerization Conversion Rate of Chloroprene Polymer

Approximately 1 g of the chloroprene polymer latex (A) was precisely weighed on an aluminum dish, heated and dried in an oven at 141°C for 30 minutes, and then left to be cooled to room temperature in a desiccator, the mass was measured and regarded as the mass of a non-volatile component. The polymerization conversion rate was calculated with an assumption that the theoretical proportion of a non-volatile component of a reaction liquid in a case where all monomers, such as chloroprene and 2,3-dichloro-1,3-butadiene, were polymerized to turn into the non-volatile component is a polymerization conversion rate of 100%.

The polymerization conversion rate was obtained in accordance with the equation (1). Polymerization conversion rate [%] = [(amount of polymer generated/amount of monomers prepared)] × 100

At the time of calculating the amount of the polymer of the chloroprene polymer latex (A) generated, the amount was calculated by subtracting the content of, for example, the tackifier, a surfactant (other than those used in the polymerization of the chloroprene polymer latex (A)), a vulcanization accelerator, a metal oxide such as a zinc oxide dispersion, an acid acceptor, an antioxidant, a filler, a pigment, a colorant, a wetting agent, a defoamer, or the thickener.

### 3) Content Rate of Gel Component

1 g (moisture amount: 35 to 65 mass%) of the chloroprene polymer latex (A) is added dropwise to 100 ml of tetrahydrofuran (hereinafter, also referred to as "THF") and shaken for 12 hours, then, a dissolved phase of the supernatant is separated with a centrifuge, THF is evaporated and dried at 100°C for one hour, and the mass of a dried product is measured. Since the mass of this dried product is the mass of a tetrahydrofuran-soluble component in a chloroprene polymer, the mass of the tetrahydrofuran-soluble component is subtracted from the mass of the chloroprene polymer, the value is regarded as the mass of a gel, and the content rate of a gel component in the chloroprene polymer is calculated. Since the mass of the chloroprene polymer is almost the same as the mass of the solid content of the chloroprene polymer latex (A), the value can be used. Content rate (%) of gel component = ((mass (g) of chloroprene polymer) - (mass (g) of dried product)) ÷ (mass of chloroprene polymer) × 100

### 4) Average Particle Diameter

Regarding the average particle diameter, the z average particle diameter of a solution obtained by diluting the latex or the emulsion with pure water to 0.01 to 0.1 mass% was measured with a dynamic light scattering photometer (ZETASIZER (registered trademark) Nano-S manufactured by Malvern Panalytical Ltd.).

### 5) Softening Point

1 g of the tackifier (B) or the chlorinated polyolefin resin (C) was added to 100 L of tetrahydrofuran and dissolved by being shaken for 10 hours with a shaker (SA300) manufactured by Yamato Scientific Co., Ltd.

The shaken solution was added dropwise to 500 mL of methanol, and the generated solidified product was filtered with a stainless steel mesh having a mesh number of 80 and dried overnight in a desiccator.

The obtained dried solidified product was measured by a ring-and-ball method in accordance with JIS K 2207-1996. A specimen was melted so that no bubbles were generated at low temperatures, a ring heated to an appropriate temperature in advance was filled with the molten specimen, and the softening point was measured in a glycerin bath with an automatic softening point evaluation device.

### 6) Chlorine Content Rate

Regarding the chlorine content rate in the chlorinated polyolefin resin (C), the chlorine content was determined by an oxygen flask combustion method or a silver nitrate titration method in accordance with JIS K 7229-1995.

The chlorine content rate was obtained by dividing the chlorine content by the mass of the chlorinated polyolefin resin (C) and multiplying the result by 100.

### 7) Adhesive Force

A 180° peel test was performed on a test piece for an adhesive powder test, which will be described below, by a method in accordance with JIS K 6854-2-1999. As the adhesive force, a normal adhesive force (kN/m) was measured. The adhesive force is a value measured after the test piece is pasted and then cured for 1 day at 23°C and 60%RH (relative humidity) and the peel test is then performed.

### 8) Thermal Creep Resistance

After a test piece for an adhesive force test, which will be described below, was cured under a 23°C atmosphere for one day, a load of 100 g/25 mm was applied in a 90° direction under a 90°C atmosphere, and the peel length after 24 hours elapsed was measured and regarded as the thermal creep resistance.

### 9) Storage Stability of Adhesive Composition

An adhesive composition to be described below was put into a 150 mL polypropylene disposable cup, the opening of the cup was blocked with parafilm, and the adhesive composition was placed still at room temperature for 3 days. The cup was inclined, in a case where the adhesive composition flowed, the storage stability was considered as favorable, and in a case where the adhesive composition did not flow, that is, had been solidified, the storage stability was considered as NG.

### [Preparation of Adhesive Composition Containing Chloroprene Polymer Latex]

An adhesive composition containing a chloroprene polymer latex was fabricated by adding (blending) a tackifier (B), a chlorinated polyolefin resin (C), and other additives to a chloroprene polymer latex (A) obtained in each preparation example in amounts shown in Table 1 and Table 2.

### [Fabrication of Each Test Piece]

### 1) Test Piece for Adhesive Force Test

150 g (solid content)/m² of each adhesive composition containing a chloroprene polymer latex was applied to a polypropylene natural color plate (100 mm in width, 200 mm in length, and 3 mm in thickness; applied surface: 100 mm in width and 100 mm in length) with a spray having an opening diameter of 1.5 mm, dried at 80°C for 5 minutes, and then left to be cooled at room temperature for 2.5 minutes. A polypropylene foam (100 mm in width, 200 mm in length, and 15 mm in thickness; applied surface: 100 mm in width and 100 mm in length) was dried at 150°C for 2 minutes, pasted to the polypropylene natural color plate, pressed by reciprocating a 5 kg hand roller four times, and then cut out to a width of 25 mm, and this was used as a test piece for an adhesive force test.

### Preparation Example 1

### [Production of Chloroprene Polymer Latex (A)-1]

1830 g of a chloroprene monomer, 170 g of 2,3-dichloro-1,3-butadiene, 86 g of disproportionated rosin (manufactured by Taiwan Arakawa Chemical Industries, Ltd., R-600), 1715 g of pure water, 22.8 g of potassium hydroxide, 5.2 g of sodium hydroxide, 1.2 g of n-dodecyl mercaptan (molecular weight modifier), and 10.4 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

5.6 g of potassium sulfite was added to this emulsified product, next, 1.2 g of potassium persulfate was added thereto as a polymerization initiator, and polymerization was performed at 40°C under a nitrogen gas atmosphere. Once the polymerization conversion rate reached 88%, 0.4 g of phenothiazine was added thereto immediately to stop the polymerization. Subsequently, unreacted chloroprene was removed by steam stripping, and a chloroprene polymer latex (A)-1 was obtained. The content rate of the gel component in the chloroprene polymer in the chloroprene polymer latex (A)-1 was 42 mass%, the solid content concentration of the chloroprene polymer latex (A)-1 was 50 mass%, and the average particle diameter was 130 nm.

### Preparation Example 2

### [Production of Chloroprene Polymer Latex (A)-2]

2000 g of a chloroprene monomer, 34.2 g of disproportionated rosin (manufactured by Arakawa Chemical Industries, Ltd., R-600), 1211 g of pure water, 21.3 g of potassium hydroxide, 3.6 g of n-dodecyl mercaptan (molecular weight modifier), and 24 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

2.0 g of potassium sulfite was added to this emulsified product, next, 1.0 g of potassium persulfate was added thereto as a polymerization initiator, and polymerization was performed at 45°C under a nitrogen gas atmosphere. Once the polymerization conversion rate reached 90%, 0.4 g of phenothiazine was added thereto immediately to stop the polymerization. Subsequently, unreacted chloroprene was removed by steam stripping, and a chloroprene polymer latex (A)-2 was obtained. The content rate of the gel component in the chloroprene polymer in the chloroprene polymer latex (A)-2 was 13 mass%, the solid content concentration of the chloroprene polymer latex (A)-2 was 58 mass%, and the average particle diameter was 200 nm.

### Preparation Example 3

### [Production of Chloroprene Polymer Latex (A)-3]

1600 g of chloroprene, 56 g of disproportionated rosin (manufactured by Arakawa Chemical Industries, Ltd., R-600), 1444 g of pure water, 14.4 g of sodium hydroxide, 1.8 g of n-dodecyl mercaptan (molecular weight modifier), and 22.6 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

4.8 g of potassium sulfite was added to this emulsified product, next, 0.8 g of potassium persulfate was added thereto as a polymerization initiator, and polymerization was performed at 15°C under a nitrogen gas atmosphere. Once the polymerization conversion rate reached 78%, 0.5 g of phenothiazine was added thereto immediately to stop the polymerization. Subsequently, unreacted chloroprene was removed by steam stripping, and a chloroprene polymer latex (A)-3 was obtained. The content rate of the gel component in the chloroprene polymer in the chloroprene polymer latex (A)-3 was 0 mass%, the solid content concentration of the chloroprene polymer latex (A)-3 was 58 mass%, and the average particle diameter was 130 nm.

### Preparation Example 4

### [Production of Chloroprene Polymer Latex (A)-4]

1830 g of chloroprene, 170 g of 2,3-dichloro-1,3-butadiene, 86 g of disproportionated rosin (manufactured by Arakawa Chemical Industries, Ltd., R-600), 1715 g of pure water, 22.8 g of potassium hydroxide, 5.2 g of sodium hydroxide, and 10.4 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

5.6 g of potassium sulfite was added to this emulsified product, next, 1.2 g of potassium persulfate was added thereto as a polymerization initiator, and polymerization was performed at 40°C under a nitrogen atmosphere. Once the polymerization conversion rate reached 88%, 0.4 g of phenothiazine was added thereto immediately to stop the polymerization. Subsequently, unreacted chloroprene was removed by steam stripping, and a chloroprene polymer latex (A)-4 was obtained. The content rate of the gel component in the chloroprene polymer in the chloroprene polymer latex (A)-4 was 79 mass%, the solid content concentration of the chloroprene polymer latex (A)-4 was 50 mass%, and the average particle diameter was 130 nm.

### Preparation Example 5

### [Production of Chloroprene Polymer Latex (A)-5]

2000 g of a chloroprene monomer, 34.2 g of disproportionated rosin (manufactured by Arakawa Chemical Industries, Ltd., R-600), 1211 g of pure water, 21.3 g of potassium hydroxide, 1.0 g of n-dodecyl mercaptan (molecular weight modifier), and 24 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

2.0 g of potassium sulfite was added to this emulsified product, next, 1.0 g of potassium persulfate was added thereto as a polymerization initiator, and polymerization was performed at 45°C under a nitrogen gas atmosphere. Once the polymerization conversion rate reached 90%, 0.4 g of phenothiazine was added thereto immediately to stop the polymerization. Subsequently, unreacted chloroprene was removed by steam stripping, and a chloroprene polymer latex (A)-5 was obtained. The content rate of the gel component in the chloroprene polymer in the chloroprene polymer latex (A)-5 was 87 mass%, the solid content concentration of the chloroprene polymer latex (A)-5 was 58 mass%, and the average particle diameter was 200 nm.

### Example 1

100 Parts by mass of the chloroprene polymer latex (A)-1 in terms of the solid content as the chloroprene polymer latex (A), 20 parts by mass of SUPER ESTER E-720W (manufactured by Arakawa Chemical Industries, Ltd.) in terms of the solid content (solid content concentration: 50 mass%) as the tackifier (B), 20 parts by mass of SUPERCHLON (registered trademark) E-480T (manufactured by Nippon Paper Industries Co., Ltd.) in terms of the solid content (solid content concentration: 30 mass%) as the emulsion of chlorinated polyolefin resin (C), 0.5 parts by mass of AZ-SW (manufactured by Osaki Industry Co., Ltd.) in terms of the solid content (solid content concentration: 50 mass%) as zinc oxide, and 0.3 parts by mass of a 10 mass% diluted solution of SN-THICKENER 612 (manufactured by SAN NOPCO LIMITED) (solid content concentration: 40 mass%) as a thickener were added and uniformly stirred to obtain an adhesive composition containing a chloroprene polymer latex.

### Examples 2 to 7 and Comparative Examples 1 to 14

In Example 1, the adhesive composition was fabricated by changing the kind and amount of the chloroprene polymer latex (A), the kind and amount of the tackifier (B), the amount of the emulsion of the chlorinated polyolefin resin (C), and the addition of a new crosslinking agent, thereby obtaining adhesive compositions shown in Table 1 and Table 2. The evaluation of the adhesive forces and the results of the thermal creep resistance tests are shown in Table 1 and Table 2.

The examples are shown in Table 1, and the comparative examples are shown in Table 2.

**[Table 1]**

| | | Example 1 | Example 2 | Example 3 | Example 4 | Example 5 | Example 6 | Example 7 |
|---|---|---|---|---|---|---|---|---|
| Chloroprene polymer latex (A)-1 | | 100 | | 100 | 100 | 100 | 100 | 100 |
| Chloroprene polymer latex (A)-2 | | | 100 | | | | | |
| Tackifier (B) | E-720W | 20 | 20 | | | | 10 | 20 |
| | SNOWTACK 100G | | | 20 | | | | |
| | E-900-NT | | | | 20 | | | |
| | E-100 | | | | | 20 | | |
| | AQUATAC 6025 | | | | | | 10 | |
| Chlorinated polyolefin resin (C) | E-480T | 20 | 20 | 20 | 20 | 20 | 20 | 10 |
| Zinc oxide | ZnO(AZ-SW) | 0.5 | 0.5 | 0.5 | 0.5 | 0.5 | 0.5 | 0.5 |
| Thickener | 10% SN-Thickener 612 | 0.3 | 0.3 | 0.3 | 0.3 | 0.3 | 0.3 | 0.3 |
| | | | | | | | | |
| **evaluation** | | | | | | | | |
| Adhesive force | (kN/m) | 0.91 | 1.14 | 0.92 | 0.64 | 0.61 | 0.92 | 0.68 |
| 90°C thermal creep resistance test | (mm) | 1 | 3 | 1 | 1 | 1 | 0 | 1 |
| Storage stability of adhesive composition | | Favorable | Favorable | Favorable | Favorable | Favorable | Favorable | Favorable |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|---|---|---|---|---|
| Chloroprene polymer latex (A)-1 | | | | | 100 | 100 | 100 | 100 | 100 | 100 | 100 | 100 | 100 | 100 | 100 |
| Chloroprene polymer latex (A)-3 | | 100 | | | | | | | | | | | | | |
| Chloroprene polymer latex (A)-4 | | | 100 | | | | | | | | | | | | |
| Chloroprene polymer latex (A)-5 | | | | 100 | | | | | | | | | | | |
| Tackifier (B) | E-720W | 20 | 20 | 20 | 30 | 5 | | | 20 | 20 | 20 | 20 | 20 | 20 | 20 |
| | DERMULSENE RE 1513 | | | | | | 20 | | | | | | | | |
| | AQUATAC6025 | | | | | | | 20 | | | | | | | |
| Chlorinated polyolefin resin (C) | E-480T | 20 | 20 | 20 | 20 | 20 | 20 | 20 | 30 | 5 | 0 | | | | 20 |
| | E-415 | | | | | | | | | | | 20 | | | |
| | CP-347W | | | | | | | | | | | | 20 | | |
| | CP-349W | | | | | | | | | | | | | 20 | |
| Zinc oxide | ZnO(AZ-SW) | 0.5 | 0.5 | 0.5 | 0.5 | 0.5 | 0.5 | 0.5 | 0.5 | 0.5 | 0.5 | 0.5 | 0.5 | 0.5 | 0.5 |
| Thickener | 10% SN-Thickener 612 | 0.5 | 0.3 | 0.3 | 0.3 | 0.3 | 0.3 | 0.3 | 0.3 | 0.3 | 0.3 | 0.3 | 0.3 | 0.3 | 0.3 |
| Crosslinking agent | WB40-100 | | | | | | | | | | | | | | 2.0 |
| | | | | | | | | | | | | | | | |
| evaluation | | | | | | | | | | | | | | | |
| Adhesive force | (kN/m) | 1.05 | 0.65 | 0.29 | 0.19 | 0.05 | 0.45 | 0.20 | 0.52 | 0.83 | 0.54 | 0.05 | 0.41 | 0.00 | 0.72 |
| 90°C thermal creep resistance test | (mm) | >200 | >200 | >200 | >200 | >200 | >200 | >200 | >200 | >200 | >200 | >200 | >200 | >200 | >200 |
| Storage stability of adhesive composition | | Favorable | Favorable | Favorable | Favorable | Favorable | Favorable | Favorable | Favorable | Favorable | Favorable | Favorable | Favorable | Favorable | NG |

Reagent lists are shown in Tables 3 to 5.

**[Table 3]**

| Chloroprene polymer latex (A) | Content rate of gel component |
|---|---|
| (A)-1 | 37 mass% |
| (A)-2 | 22 mass% |
| (A)-3 | 0 mass% |
| (A)-4 | 79 mass% |
| (A)-5 | 87 mass% |

**[Table 4]**

| Tackifier (B) | Manufacturer | Resin kind | Rosin kind | Softening point |
|---|---|---|---|---|
| SUPER ESTER E-720W | Arakawa Chemical Industries, Ltd. | Rosin | Rosin ester | 100°C |
| SNOWTACK 100G | LAWTER | Rosin | Rosin ester | 100°C |
| DERMULSENE RE 1513 | DRT | Rosin | Rosin ester | 82°C |
| AQUATAC 6025 | KRATON | Rosin | Rosin ester | 25°C |
| SUPER ESTER E-900-NT | Arakawa Chemical Industries, Ltd. | Rosin | Polymerized rosin | 160°C |
| TAMANOL E-100 | Arakawa Chemical Industries, Ltd. | Terpene phenol | - | 150°C |

**[Table 5]**

| Chlorinated polyolefin resin (C) | Manufacturer | Softening point | Chlorine content rate |
|---|---|---|---|
| SUPERCHLON E-480T | Nippon Paper Industries Co., Ltd. | 60-70°C | 20 mass% |
| SUPERCHLON E-415 | Nippon Paper Industries Co., Ltd. | 80-90°C | 15 mass% |
| CP-347W | EASTMAN | 100-120°C | 18-23 mass% |
| CP-349W | EASTMAN | 100-120°C | 18-23 mass% |

**[Table 6]**

| Crosslinking agent | Manufacturer | Compound name |
|---|---|---|
| WB40-100 | Asahi Kasei Corporation | Hexamethylene diisocyanate |

As is clear from Examples 1 to 7 in Table 1, in the adhesive composition containing a chloroprene polymer latexes containing a chloroprene polymer latex containing the chloroprene polymer latex (A), the tackifier(s) (B), and the chlorinated polyolefin resin (C), in which the content rate of the gel component of the chloroprene polymer in the chloroprene polymer latex (A) was more than 0 mass% and less than 50 mass%, at least one of the tackifiers (B) had a softening point of 85°C or higher, and the chlorinated polyolefin resin (C) had a softening point of lower than 80°C, the tackifier (B) was more than 5 parts by mass and less than 30 parts by mass relative to 100 parts by mass of the solid content of the chloroprene polymer latex (A), the chlorinated polyolefin resin (C) was 6 parts by mass or more and less than 30 parts by mass relative to 100 parts by mass of the solid content of the chloroprene polymer latex (A), and no crosslinking agent was contained, the adhesive forces to the polypropylene plate and the polypropylene foam were both as high as 0.61 to 1.14 kN/m, and favorable heat resistance was exhibited such that the peeling lengths during the thermal creep resistance tests were 10 mm or shorter.

In addition, as is clear from Examples 1 to 7, regardless of the amounts of zinc oxide and the thickener added, favorable adhesiveness to polypropylene and heat resistance are exhibited.

On the other hand, in Comparative Examples 1 to 3 in Table 2 where the content rate of the gel component of the chloroprene polymer in the chloroprene polymer latex (A) was 0 mass% or more than 50 mass%, the thermal creep resistance was not sufficient.

Furthermore, in Comparative Examples 4 and 5 where 5 parts by mass or less or 30 parts by mass or more of the tackifier (B) was contained relative to 100 parts by mass of the solid content of the chloroprene polymer latex (A), the thermal creep resistance was not sufficient. In addition, in Comparative Examples 6 and 7 where the softening point of the tackifier (B) was lower than 85°C, the thermal creep resistance was not sufficient.

Furthermore, in Comparative Examples 8 to 10 where less than 6 parts by mass or 30 parts by mass or more of the chlorinated polyolefin resin (C) was contained relative to 100 parts by mass of the solid content of the chloroprene polymer latex (A), the thermal creep resistance was not sufficient. In addition, in Comparative Examples 11 to 13 where the softening point of the chlorinated polyolefin resin (C) was 80°C or higher, the thermal creep resistance was not sufficient.

Furthermore, in Comparative Example 14 where 2 parts by mass of a crosslinking agent WB40-100 was contained relative to 100 parts by mass of the solid content of the chloroprene polymer latex (A), the storage stability of the adhesive composition was low.

## Claims

1. An adhesive composition containing a chloroprene polymer latex, comprising:
a chloroprene polymer latex (A);
a tackifier(s) (B); and
a chlorinated polyolefin resin (C),
wherein a content rate of a gel component of a chloroprene polymer in the chloroprene polymer latex (A) is more than 0 mass% and 50 mass% or less, at least one of the tackifiers (B) has a softening point of 85°C or higher, and the chlorinated polyolefin resin (C) has a softening point of lower than 80°C,
the tackifier (B) is more than 5 parts by mass and less than 30 parts by mass relative to 100 parts by mass of a solid content of the chloroprene polymer latex (A),
the chlorinated polyolefin resin (C) is 6 parts by mass or more and less than 30 parts by mass relative to 100 parts by mass of a solid content of the chloroprene polymer latex (A), and
no crosslinking agent is contained.

2. The adhesive composition containing a chloroprene polymer latex according to claim 1, wherein the chloroprene polymer is a chloroprene homopolymer or a copolymer containing at least chloroprene and 2,3-dichloro-1,3-butadiene.

3. The adhesive composition containing a chloroprene polymer latex according to claim 1, wherein the tackifier (B) comprises at least one of a rosin resin, a rosin ester resin, a terpene phenol resin, and an alicyclic petroleum resin.

4. The adhesive composition containing a chloroprene polymer latex according to claim 1, wherein the softening point of the tackifier (B) is 85°C or higher and 250°C or lower.

5. The adhesive composition containing a chloroprene polymer latex according to claim 1, further comprising a metal oxide or a hydroxide.

6. The adhesive composition containing a chloroprene polymer latex according to claim 1, further comprising a thickener.

7. An adhesive layer comprising the adhesive composition containing a chloroprene polymer latex according to any one of claims 1 to 6.

8. A laminate obtained by laminating two kinds of adherends through the adhesive composition containing a chloroprene polymer latex according to any one of claims 1 to 6.

9. The laminate according to claim 8, wherein at least one of the adherends is a foamed organic material.

10. The laminate according to claim 9, wherein the foamed organic material in the laminate is any of polypropylene, polyethylene, and polyurethane.
